# EUROPEAN PATENT APPLICATION

(11) **EP 1 486 675 A1**
(43) Date of publication of application: **15.12.2004**
(21) Application number: 04253245.7
(22) Date of filing: 01.06.2004
(51) Int. Cl.: F04C 2/10

(54) **Aeronautical generator**

(30) Priority: 09.06.2003 GB 0313273
(71) Applicant: Goodrich Control Systems Ltd, Solihull, West Midlands B90 4LA (GB)
(72) Inventor: Harris, Paul, Bedfordshire, LU7 2SY (GB); Skorucak, Bela, c/o Thales Itel. Prop., 94117 Arcueil Cedex (FR)
(74) Representative: Beck, Simon Antony

(57) **Abstract**

An unpressurised aeronautical generator (2), is provided which includes a two stage oil pump (6) comprising a centrifugal pump (8) and a gerotor pump (26). The centrifugal pump draws oil through openings (18) in a manifold, pressurises it and supplies it to the gerotor pump. The gerotor pump then pumps the pressurised oil throughout the generator. A small gerotor pump is used, which is still sufficient to operate at low pressures and high altitudes.

## Description

### TECHNICAL FIELD

This invention relates to generators for use within aircraft and, in particular, to unpressurised generators and the oil pumps used within the generators. As used herein the term "unpressurised" relates to a generator which is not actively pressurised. Thus no air pumping device is provided to introduce air into the generator against a pressure gradient.

### BACKGROUND TO THE INVENTION

Aircraft generators typically use positive displacement pumps to provide a pressurised source of lubricating and cooling oil for circulation within the generator. Typically the pump is situated within the generator casing, and pumps oil from an integral sump which collects oil that has been utilised within the generator.

The pump is selected to provide the required fluid output (pressure and flow rate) with minimum size and weight. One of the limiting factors is the rate at which the inlet chambers of the pump are capable of filling from the sump. At low ambient pressures, such as are found at high altitudes, the pressure drop at the inlet to the pump may become sufficient to result in cavitation occurring at the pump inlet. The rate of oil delivery from the pump is reduced when cavitation occurs. This problem can be overcome by using a lower speed pump rated for use at high altitudes. Such a pump is larger and heavier and thus undesirable for aerospace applications as the weight penalty inevitably translates into aircraft fuel costs. Furthermore the pump is then overrated for use at sea level.

An alternative solution is known which involves using an air pump to pressurise the interior of the generator casing, thereby ensuring that the pressure at the inlet of the pump is sufficient to avoid cavitation at all altitudes. This allows a smaller pump to be is used. This is the solution commonly used in generators today. This produces a number of alternative problems.

Pressurised air is introduced into the generator by a pump, which is typically a jet pump or a venturi pump. This air invariably contains some moisture. The moisture may be absorbed by the oil thus contributing to the degradation of the oil over time. This increases the frequency at which the oil needs to be replaced and hence adds to maintenance requirements and costs.

The jet pump works continuously. However, it would be disadvantageous to have a continuous flow of air through the generator. This problem is typically addressed by the provision of an air inlet valve which inhibits the flow of air to pressurise the generator once a suitable pressure has been attained. During changes in external air pressure, for example during aircraft descent there is a need for a vent valve to regulate the pressure within the generator. Each time the valve operates a volume of air exits from the generator. It may carry with it small droplets of oil. This reduces the oil level over time and thus contributes to maintenance requirements and costs. It is also undesirable from an environmental perspective and can cause other components around the engine to become oil stained. This may obscure oil leaks.

Finally, the generator casing must be sealed. This can be a significant problem as inevitably a drive shaft enters the generator casing. This requires the use of a complex seal such as a magnetic oil seal in order to prevent oil being blown past the seal. The seals are more expensive than labyrinth type seals (which are used in unpressurised applications) and are more prone to leakage and wear. Consequently these seals need to be serviced more regularly.

### SUMMARY OF THE INVENTION

According to a first aspect the present invention provides an unpressurised aeronautical generator comprising a reservoir of oil, a centrifugal pump and a positive displacement pump, wherein the centrifugal pump is in series fluid communication with the positive displacement pump such that, in operation, the centrifugal pump pumps oil from the reservoir to an input of the positive displacement pump, and the positive displacement pump delivers oil for use within the generator.

It is thus possible to provide an unpressurised aeronautical generator containing an oil pumping system comprising a relatively small positive displacement pump, while still being operable at low pressures and high altitudes. The unpressurised nature of the generator avoids the need for complex seals, pressurising air and vent valves. Although a vent valve may be retained for safety considerations.

Preferably the centrifugal pump is placed in-line or co-axially with the positive displacement pump, to provide a space and/or weight saving due to the resulting simplification in design of the oil pumping system. Ducting between the pumps can be minimised if the pumps are co-axially mounted and in abutment. Thus the housings of the pumps may be shared to some extent. Additionally, the centrifugal pump and the positive displacement pump may be driven using a common shaft to provide a further space and/or weight saving. However mechanical drive from a prime mover, such as an aeronautical engine, is not the only way of driving the pumps and, for example, either or both of the pumps can be electrically driven.

Advantageously one or both of the centrifugal and positive displacement pumps are contained within the outer casing of the generator. Alternatively the pumps can be positioned externally to the generator casing.

Preferably a drive shaft which drives the generator also drives the positive displacement pump and/or the centrifugal pump. Drive transfer means such as gears can be used to transfer torque from the generator drive shaft to one or both pumps, or to a shaft driving the pumps.

Preferably the positive displacement pump is a gerotor pump.

Advantageously the centrifugal and positive displacement pumps are integrated as a single oil pump.

Preferably, the reservoir is a sump within the generator casing. Advantageously the oil used within the generator collects in the reservoir, such that it may be used again.

According to a second aspect of the present invention there is provided an oil pump for use within an unpressurised generator for an aircraft, the oil pump comprising an oil inlet, an oil outlet, a regenerative pump (such as a centrifugal pump) and a positive displacement pump, and wherein, in operation, the regenerative pump pumps oil from the oil inlet to an input of the positive displacement pump, and the positive displacement pump pumps the oil to the oil outlet, and wherein the positive displacement pump is smaller than it would be if it alone was to provide oil flow to the generator.

### BRIEF DESCRIPTION OF THE DRAWINGS

The present invention will now be described by way of example only, with reference to the accompanying drawings, in which:
Figure 1 shows a cross-section of an aircraft generator constituting an embodiment of the present invention; and
Figure 2 shows a cross-section of the oil pump in greater detail.

### DETAILED DESCRIPTION OF AN EMBODIMENT OF THE INVENTION

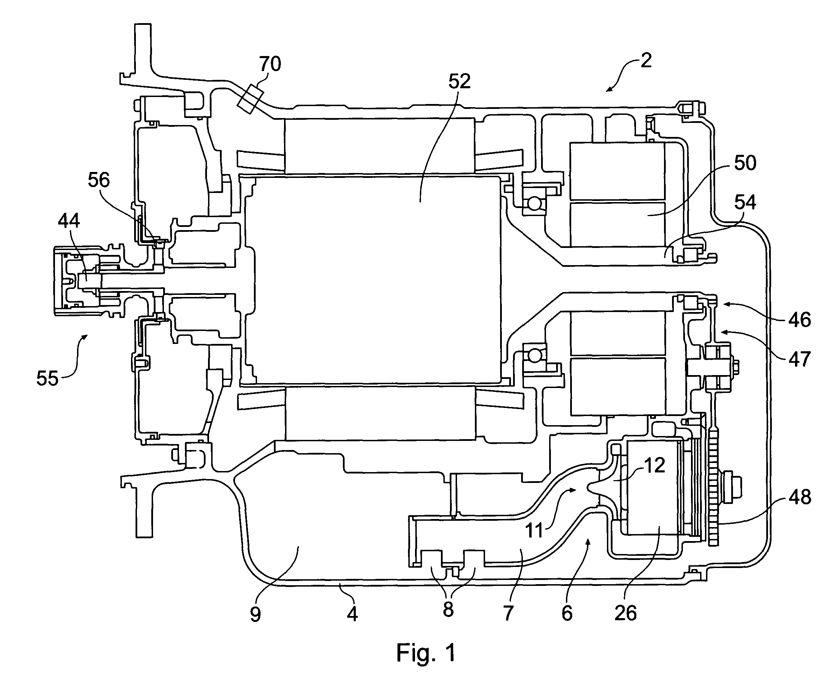

A cross-section of an aircraft generator generally indicated 2 is shown in Figure 1. The generator includes an outer casing 4, and an oil pump 6 within the casing 4 to provide pressurised lubricating and cooling oil for circulation within the generator 2.

The generator configuration is fairly standard and typically will comprise a permanent magnet exciter which is used to energise a primary exciter. The permanent magnet exciter and primary exciter are generally indicated 50. Electricity from the primary exciter is then used to energise the field windings of the main generator, generally indicated 52. The primary exciter and main generator are mounted on a common drive shaft 54 which extends at a first end 55 thereof through the casing 4 of the generator so as to receive drive from an external prime mover. A labyrinth seal 56 is provided to seal the interface between the shaft 54 and the casing 4 so as to prevent the ingress of foreign matter or of the egress of generator oil.

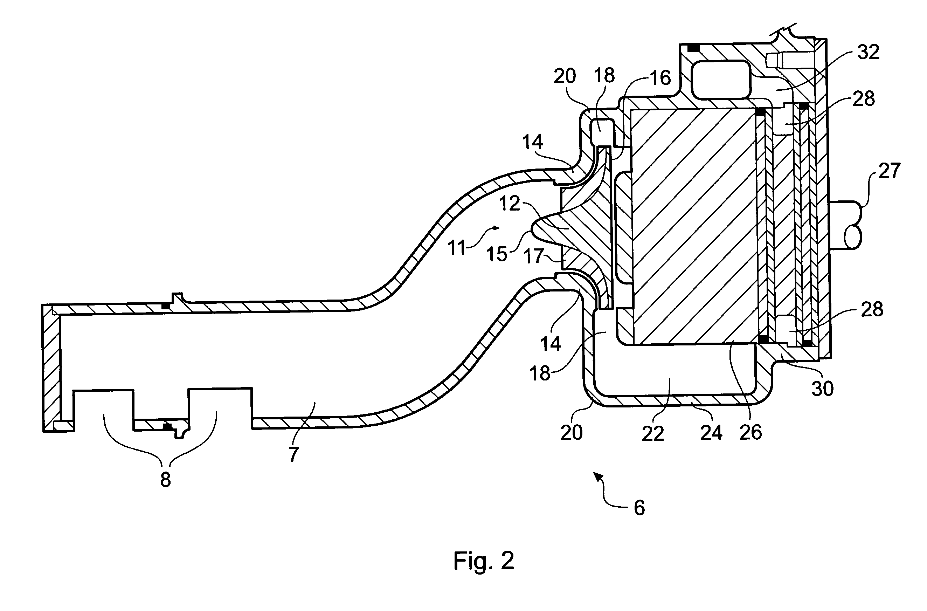

The oil pump 6 is shown in greater detail in Figure 2. The oil pump 6 has an inlet manifold 7 having openings 8 in the side thereof. The openings 8 of the manifold 7 are, in use, submerged in oil contained in a sump 9, shown in Figure 1, which is defined by the outer casing 4 of the generator 2. The manifold 7 conveys oil from the openings 8 towards a centrifugal pump 11 comprising a rotor 12 and a casing 14. The rotor 12 has a first end 15 and a second end 16, the first end 15 being disposed towards the inlet manifold 7. The radius of the rotor 12 increases from the first end 15 to the second end 16. The casing 14 is a continuation of the inlet manifold 7 and closely follows the profile of the rotor as it increases in diameter. However, rather than requiring the casing 14 to form an extension of the inlet manifold, a shrouded rotor centrifugal pump may be used instead. A plurality of rotor blades 17 are disposed around the surface of the rotor 12 between the rotor 12 and the casing 14. A toroidal cavity 18 surrounds the second end 16 of the rotor 12, and is defined by a casing 20 of the oil pump 6. An additional cavity 22 is defined by a lower wall 24 of the pump 6 and is situated substantially below a positive displacement pump, such as a gerotor pump 26 of a type known in the art. The cavities 18 and 22 are in fluid communication with each other. A central shaft 27 extends through the gerotor pump 26 and is connected to the rotor 12, so that the same shaft drives both pumps.

In use, the shaft 27 is driven to drive the gerotor pump 26 and rotate the rotor 12 of the centrifugal pump 11. The rotation of the rotor 12 and blades 17 produce a centrifugal force on any oil present around the rotor 12, and the oil is pushed to the toroidal cavity 18 and from there into the lower cavity 22. This draws oil from the sump 10 through the openings 8 of the manifold 7 to replace the displaced oil.

The gerotor pump 26 draws oil from the cavity 22. This oil is pressurised, having been pumped by the centrifugal pump 11 thereby reducing the risk of cavitation. The gerotor pump 26 pumps the pressurised oil into a second toroidal cavity 28 defined by the gerotor pump 26 and outer casing 30 of the oil pump 6. The oil then exits the cavity 28 through a channel 32, that leads to other channels (not shown) to distribute the oil throughout the generator. After use for cooling and lubrication the oil eventually returns to the sump 9, where it may be pumped again by the oil pump 6.

The generator 2 is driven by a prime mover acting on a drive shaft 54 via a coupling 44, as shown in Figure 1. The generator also has gears 46, 47 and 48 to transfer drive from the shaft 54 to the driving shaft 27 of the pump 6. Thus only one external drive required to operate the generator 2 containing the pump 6.

It is envisaged that the pump 26 and centrifugal pump 11 may be driven using separate means, for example independent gears. Alternatively, one of the pumps could be driven using an additional external drive, or an electric motor. Such separate means is useful if it is desired to drive the centrifugal and gerotor pumps 11 and 26 at different speeds.

Other forms of regenerative and positive displacement pumps may be used. Regenerative pumps are also advantageous as they tend to be self-priming.

In a modification to the above described embodiment an air inlet valve 70 (shown schematically in Figure 1) may be provided so as to admit air into the generator from the surrounding atmosphere when the pressure within the generator is less than the air pressure around the generator. Additionally the labyrinth seal 56 is replaced by a substantially gas tight seal, such as a lip seal.

This results in a generator which tends to self pressurise to the prevailing air pressure when the aircraft has landed, and the generator retains an increased internal pressure during flight helping the operation of the lubrication system without active pumping of air into the generator.

It is thus possible to provide a lighter and improved generator.

## Claims

1. An unpressurised aeronautical generator **characterised by** comprising a reservoir of oil (9) and a centrifugal pump (11), a positive displacement pump (26), and wherein the centrifugal pump is in series fluid communication with the positive displacement pump such that in operation, the centrifugal pump pumps oil from the reservoir to an input (22) of the positive displacement pump, and the positive displacement pump delivers the oil for use in the generator.

2. An unpressurised generator as claimed in claim 1, **characterised in that** the centrifugal pump (11) is positioned co-axially with the positive displacement pump (26).

3. An unpressurised generator as claimed in claim 1 or 2, **characterised in that** the centrifugal pump (11) and the positive displacement pump (26) are driven from a shared shaft (27).

4. An unpressurised generator as claimed in any one of the preceding claims, **characterised in that** an inlet manifold (7) directs the oil from the reservoir (9) to the centrifugal pump (11).

5. An unpressurised generator as claimed in any one of the preceding claims, **characterised in that** the centrifugal (11) and positive displacement (26) pumps are positioned within a casing of the generator.

6. An unpressurised generator (2) as claimed in any one of claims 1 to 4, **characterised in that** the centrifugal pump (11) and/or the positive displacement pump (26) are/is positioned externally to a casing of the generator.

7. An unpressurised generator as claimed in any one of the preceding claims, **characterised in that** the positive displacement pump (26) is a gerotor pump or a gear pump.

8. An unpressurised generator as claimed in any one of the preceding claims, **characterised in that** the centrifugal pump (11) and the positive displacement pump (26) are integrated as a single pump.

9. An unpressurised generator as claimed in any one of the preceding claims, **characterised in that** the reservoir (9) is a sump within the generator.

10. An unpressurised generator as claimed in any one of the preceding claims, **characterised in that** the generator has an air inlet valve (70) extending between the interior of the generator and the ambient surroundings and the valve is arranged to admit air into the generator when air pressure within the generator is less than an ambient air pressure.

11. An oil pump for use within an unpressurised generator (2) for an aircraft, the oil pump comprising an oil inlet (7), an oil outlet (32), and a positive displacement pump (26) **characterised by** further comprising a regenerative pump (11), and wherein, in operation, the regenerative pump pumps oil from the oil inlet to an inlet (22) of the positive displacement pump, and the positive displacement pump pumps the oil to the oil outlet, and wherein the positive displacement pump is smaller than it would be if the same pump type alone was used to provide oil flow to the generator.

12. An oil pump as claimed in claim 11, **characterised in that** the regenerative pump (11) is a centrifugal pump.

13. An oil pump as claimed in claim 11 or 12, **characterised in that** the regenerative pump (11) is positioned co-axially with the positive displacement pump (26).

14. An oil pump as claimed in any one of claims 11 to 13, **characterised in that** the regenerative pump (11) and positive displacement pump (26) are driven from a shared shaft (27).
